# EUROPEAN PATENT APPLICATION

(11) **EP 4 760 914 A1**
(43) Date of publication of application: **17.06.2026**
(21) Application number: 25222818.4
(22) Date of filing: 12.12.2025
(51) Int. Cl.: H01M 50/209, H01M 50/289

(54) **BATTERY PACK AND ELECTRONIC APPARATUS INCLUDING THE SAME**

(30) Priority: 16.12.2024 KR 20240187445
(71) Applicant: SAMSUNG SDI CO., LTD., Yongin-si, Gyeonggi-do 17084 (KR)
(72) Inventor: KIM, Sangkyun, 17084 Yongin-si, Gyeonggi-do (KR)
(74) Representative: Gulde & Partner

(57) **Abstract**

Provided are a battery pack and an electronic apparatus including the battery pack, capable of aligning battery cells in accurate positions inside a battery pack. The battery pack includes a plurality of battery groups each having a plurality of battery cells, a pair of end plates arranged on opposite sides of the plurality of battery groups, and a middle plate placed between the plurality of the battery groups and connecting the pair of the end plates, wherein a guide protrusion extending in a preset direction to be placed between the plurality of battery cells is protruded from the middle plate, and the electronic apparatus includes the battery pack.

## Description

### BACKGROUND

### 1. Field

The present disclosure relates to a battery pack and an electronic apparatus including the same.

### 2. Description of the Related Art

Secondary batteries are batteries that may be charged and discharged, unlike primary batteries that cannot be recharged. Low-capacity secondary batteries are used in small, portable electronic devices, such as smartphones, feature phones, laptop computers, digital cameras, and camcorders, while large-capacity battery cells are widely used as power sources for driving motors in hybrid vehicles, electric vehicles, etc., and batteries for power storage. Secondary batteries include an electrode assembly including a positive electrode and a negative electrode, a case accommodating the electrode assembly, and electrode terminals connected to the electrode assembly.

Small mobile devices, such as cell phones, may operate for a certain period of time with output and capacity of a single battery, but in a case in which long-term operation and high-power operation are required, such as for electric vehicles and hybrid vehicles that consume a lot of power, a module form including a plurality of batteries is preferred due to issues with output and capacity, and an output voltage or output current may be increased depending on the number of built-in batteries.

The detailed information described in the background technology of the disclosure is only intended to improve understanding of the background of the present disclosure and therefore may include information that does not constitute prior art.

### SUMMARY

The present disclosure provides a battery pack in which battery cells are easily aligned inside the battery pack by supporting the battery cells using a structure of a middle plate, and an electronic apparatus including the battery pack.

However, the technical problems to be solved by the present disclosure are not limited to the problems described above, and other problems not mentioned may be clearly understood by those skilled in the art from the description of the disclosure described below. The present invention is set out in the appended set of claims, wherein the drawings and respective description relate to advantageous embodiments thereof.

According to an aspect of the disclosure, there is provided a battery pack including a plurality of battery groups each having a plurality of battery cells, a pair of end plates arranged on opposite sides of the plurality of battery groups, and a middle plate placed between the plurality of the battery groups and connecting the pair of the end plates, wherein a guide protrusion extending in a preset direction to be placed between the plurality of battery cells is protruded from the middle plate.

The guide protrusion may be provided in plurality, and the plurality of guide protrusions may be apart from each other and have guide intervals.

The guide interval may correspond to a thickness of each battery cell.

The guide protrusion may be formed on each surface of the middle plate facing the plurality of different battery groups.

The guide protrusion may include a pair of contact surfaces that contact each corner of the plurality of the battery cells and a connecting surface that connects the pair of the contact surfaces.

The contact surfaces facing the corners of the battery cells may have a shape corresponding to a shape of the corners of the battery cells.

The battery pack may further include a spacer placed between the plurality of battery cells adjacent to each other, wherein the connecting surface has a length corresponding to a thickness of the spacer.

An insertion groove having a preset depth may be formed in the end plate, and the middle plate may include an insertion portion capable of being inserted into the insertion groove.

The end plate may include a support portion connected to one surface of the insertion groove and having elastic restoring force in a direction away from the one surface.

The insertion portion includes an insertion block engaged with the support portion.

According to another aspect of the disclosure, there is provided an electronic apparatus including a battery pack supplying power, wherein the battery pack includes: a plurality of battery groups each having a plurality of battery cells, a pair of end plates arranged on opposite sides of the plurality of battery groups, and a middle plate placed between the plurality of the battery groups and connecting the pair of the end plates, and wherein a guide protrusion extending in a preset direction to be placed between the plurality of battery cells is protruded from the middle plate.

The guide protrusion may be provided in plurality, and the plurality of guide protrusions may be apart from each other and have guide intervals.

The guide interval may correspond to a thickness of each battery cell.

The guide protrusion may be formed on each surface of the middle plate facing the plurality of different battery groups.

The guide protrusion may include a pair of contact surfaces that contact each corner of the plurality of the battery cells and a connecting surface that connects the pair of the contact surfaces.

The contact surfaces facing the corners of the battery cells may have a shape corresponding to a shape of the corners of the battery cells.

The battery pack may further include a spacer placed between the plurality of battery cells adjacent to each other, wherein the connecting surface has a length corresponding to a thickness of the spacer.

An insertion groove having a preset depth may be formed in the end plate, and the middle plate may include an insertion portion capable of being inserted into the insertion groove.

The end plate may include a support portion connected to one surface of the insertion groove and having elastic restoring force in a direction away from the one surface.

The insertion portion may include an insertion protrusion that is capable of being engaged with the support portion.

### BRIEF DESCRIPTION OF THE DRAWINGS

The following drawings attached to this specification illustrate embodiments and, together with the detailed description of the invention described below, serve to further understand the technical idea of the present disclosure; therefore, the present disclosure should not be interpreted as being limited to matters described in such drawings in which:
FIG. 1 is a diagram illustrating a battery pack according to an embodiment of the present disclosure;
FIG. 2 is an exploded perspective view of the battery pack of FIG. 1;
FIG. 3 is a diagram illustrating a middle plate of FIG. 1;
FIG. 4 is an enlarged view illustrating portion A of FIG. 1;
FIG. 5 is an enlarged view of the battery pack taken along line I-I' of FIG. 1;
FIGS. 6 and 7 are diagrams illustrating a process of combining the middle plate and end plate of FIG. 5; and
FIG. 8 is a diagram illustrating a battery vehicle including a battery pack according to an embodiment of the present disclosure.

### DETAILED DESCRIPTION

Hereinafter, embodiments are described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the embodiments disclosed in this specification and the configuration illustrated in the drawings are only one of the most preferred embodiments and do not represent all the technical idea of the present disclosure, so it should be understood that other equivalents and modifications could be made thereto without departing from the scope of the disclosure.

It will be further understood that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

In addition, for ease of understanding of the present disclosure, the accompanying drawings are not drawn to real scale, but the dimensions of some components may be exaggerated. In addition, like reference numerals may be given to the like components in different embodiments.

When two components are referred to as being equal, it represents that they are 'substantially equal.' Accordingly, substantially equal may encompass all cases having the deviation regarded as a low level in the corresponding technical field, for example, the deviation of 5% or less. In addition, a uniform parameter in a predetermined area may be uniform from the average point of view.

Although the terms first, second or the like are used to describe different elements, these elements are not limited by the terms. These terms are used to distinguish one element from another, and unless stated to the contrary, a first element may be a second element.

Throughout the specification, unless stated otherwise, each element may be singular or plural.

When an element is "above (or under)" or "on (or below)" another element, the element may be on an upper surface (or a lower surface) of the other element, and intervening elements may be present between the element and the other element on (or below) the element.

In addition, when an element is referred to as being "connected", "coupled" or "linked" to another element, the element may be directly connected or coupled to the other element, but it should be understood that intervening elements may be present between each element, or each element may be "connected", "coupled" or "linked" to each other through another element. In addition, when a portion is electrically coupled to another portion, this includes not only the case where it is directly connected, but also the case where it is connected with another element in between.

Throughout the specification, "A and/or B" refers to either A or B or both A and B unless expressly stated otherwise. That is, "and/or" includes all or any combination of the listed items. "C to D" refers to C or greater and D or smaller unless expressly stated otherwise.

The terminology used herein is for the purpose of describing embodiments of the present disclosure and is not intended to be limiting of the present disclosure.

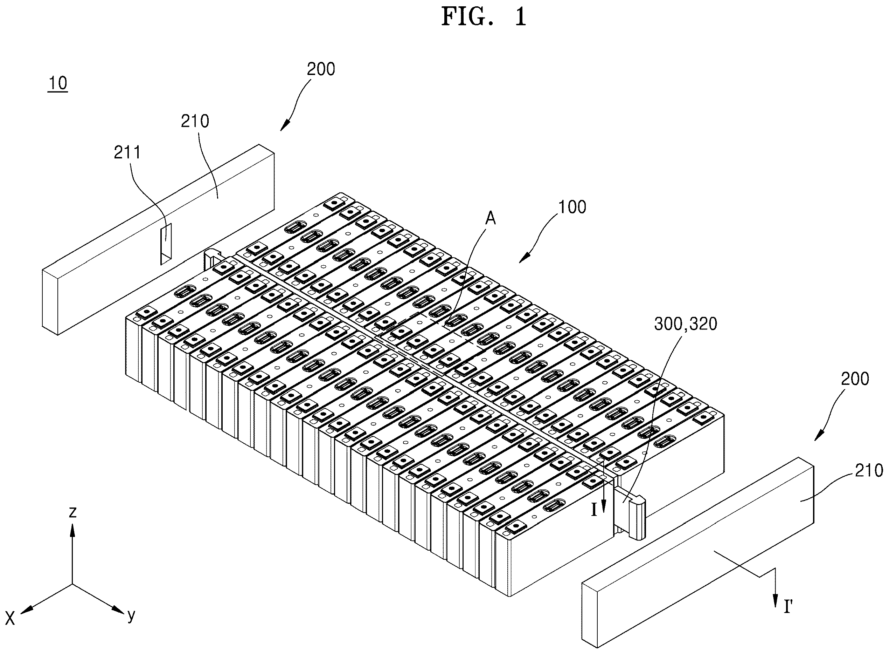

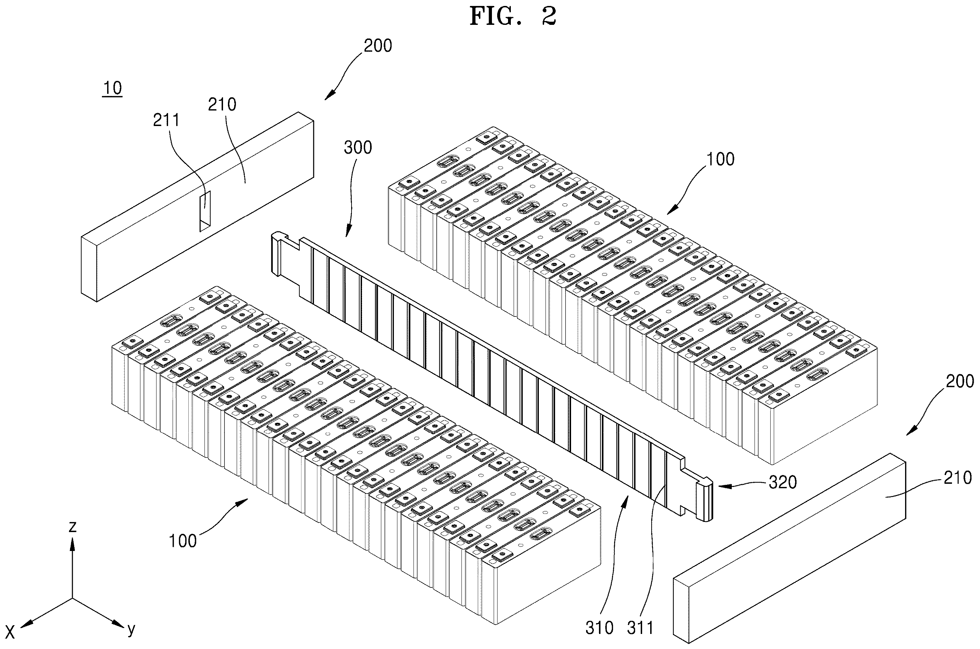

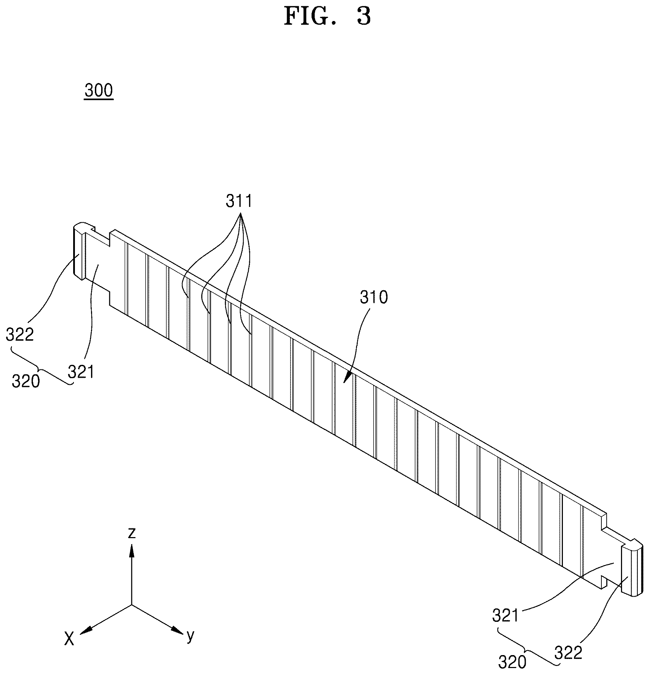

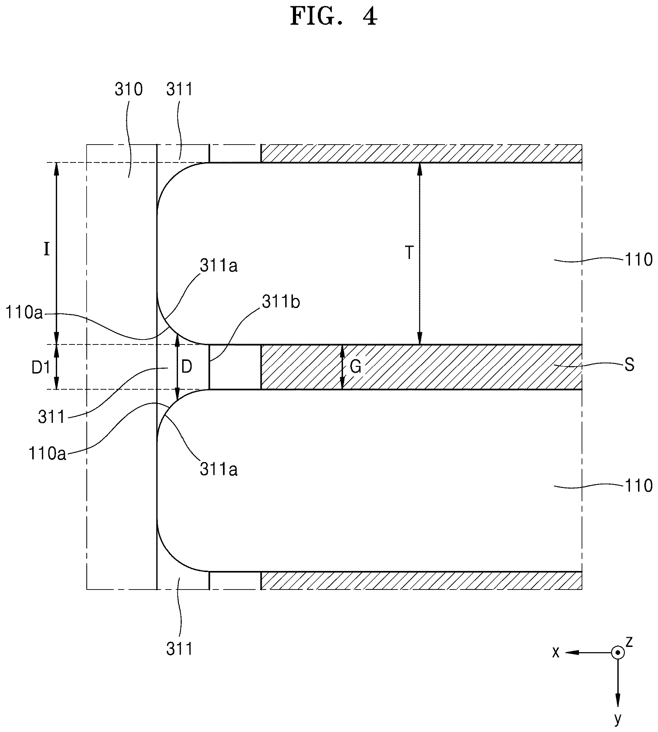

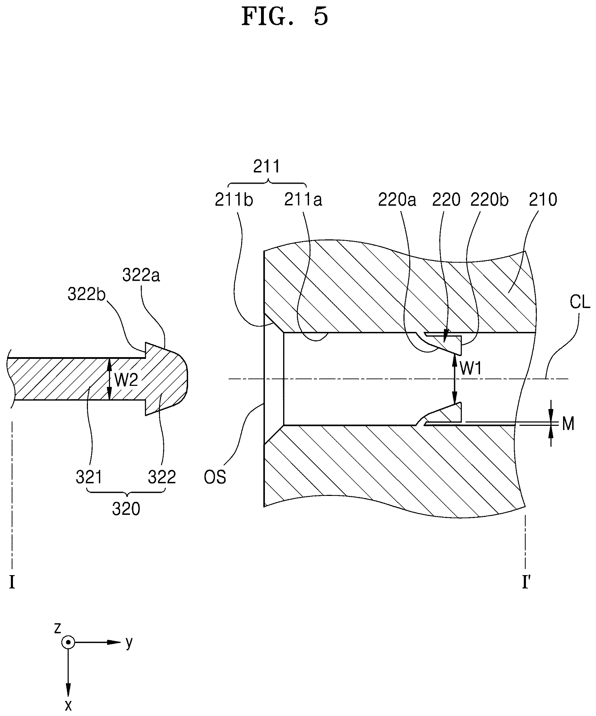

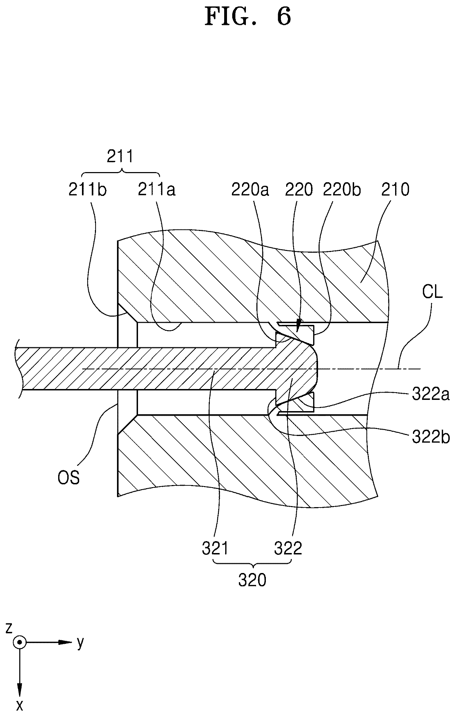

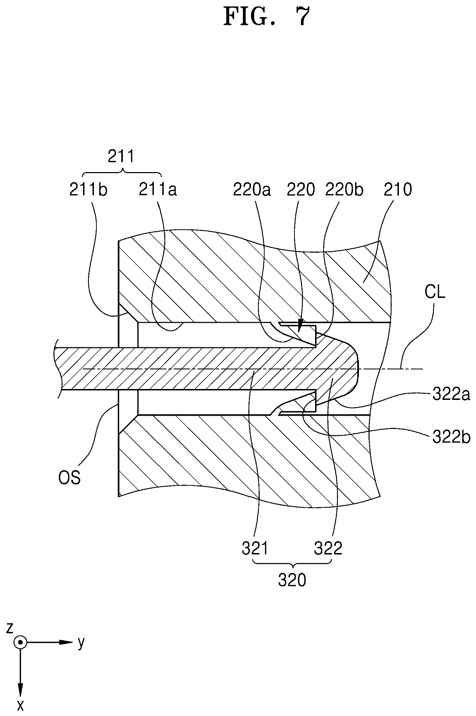

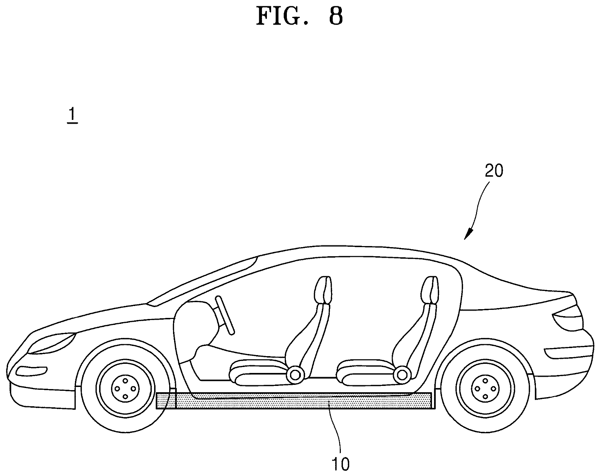

FIG. 1 is a diagram illustrating a battery pack according to an embodiment of the present disclosure. FIG. 2 is an exploded perspective view of the battery pack of FIG. 1. FIG. 3 is a diagram illustrating a middle plate of FIG. 1. FIG. 4 is an enlarged view illustrating portion A of FIG. 1. FIG. 5 is an enlarged view of the battery pack taken along line I-I' of FIG. 1. FIGS. 6 and 7 are diagrams illustrating a process of combining the middle plate and end plate of FIG. 5. FIG. 8 is a diagram illustrating a vehicle including a battery pack according to an embodiment of the present disclosure.

In the embodiments below, x, y, and z axes are not limited to three axes on an orthogonal coordinate system, and may be interpreted in a broader sense. For example, the x, y, and z axes may refer to different directions that are orthogonal or non-orthogonal to each other.

For convenience of description below, the x-axis is defined as a width direction of the battery pack, the y-axis is defined as a length direction of the battery pack, and the z-axis is defined as a height direction of the battery pack. In one or more embodiments, the x-axis may be a direction in which the battery cells in the battery pack are arranged.

Referring to FIGS. 1 and 8, the battery pack 10 according to an embodiment of the present disclosure may be electrically connected to an electronic apparatus. The battery pack 10 may generate power and supply electrical energy to electrically connected electronic apparatuses. Thus, the battery pack 10 may serve as a power source for electrically connected electronic apparatuses.

Referring to FIG. 8, although the battery pack 10 is placed inside an electric vehicle 1 according to one embodiment and used as a power source, an electronic apparatus that uses the battery pack 10 as a power source is not limited to the electric vehicle 1. However, hereinafter, for convenience of description, an embodiment in which the battery pack 10 is placed inside the electric vehicle 1 and electrical energy is supplied to the electric vehicle 1 is described.

Referring to FIGS. 1 and 8, the electric vehicle 1 may include a vehicle body 20 and the battery pack 10.

The vehicle body 20 may have an internal space. The vehicle body 20 has a shape that covers an internal space, so that the internal space may be spatially separated from an external space. In some embodiments, the vehicle body 20 may provide a space in which the battery pack 10 may be placed or accommodated. Thus, the vehicle body 20 may reduce the impact of the external environment on the battery pack 10.

The battery pack 10 may be mounted in the electric vehicle 1. For example, the battery pack 10 may be placed inside the vehicle body 20 and connected to an electric motor (not shown) of the electric vehicle 1. The battery pack 10 may supply electrical energy to an electrically connected electric motor to generate propulsion power for the electric vehicle 1.

The use of the battery pack 10 is not limited thereto, and the battery pack 10 may be electrically connected to at least one component (e.g., each component) of the electric vehicle 1 that requires power to supply power.

In an embodiment, the electric vehicle 1 may include, for example, a hybrid vehicle or a plug-in hybrid vehicle. The electric vehicle 1 may include a four-wheeled vehicle or a two-wheeled vehicle.

Referring to FIGS. 1 and 2, the battery pack 10 according to an embodiment of the present disclosure includes a battery group 100, a pair of end plates 200, and a middle plate 300. The battery pack 10 may further include a busbar for electrically connecting a plurality of battery cells 110 or a cooling unit for cooling the battery cells 110, but for the convenience of the description, a description of these components is omitted.

Referring to FIGS. 1, 2, and 4, the battery group 100 may include a plurality of battery cells 110 and a spacer S. A plurality of battery cells 110 included in the battery group 100 may be electrically connected to each other by a busbar (not shown). The battery cells 110, which may be connected in series or parallel with each other, may supply electrical energy stored therein to an external component.

The battery pack 10 may include two or more battery groups 100. The plurality of battery groups 100 may be electrically connected to each other. The electrically connected battery groups 100 may be configured to transmit electrical energy to an external component. In some embodiments, power may be efficiently supplied to an electronic apparatus that uses the battery pack 10 as a power source.

The battery groups 100 may be arranged side by side with each other. For example, the battery groups 100 may be arranged parallel to a direction in which the battery cells 110 are stacked. Thus, space efficiency of the battery pack 10 may be improved.

In FIGS. 1 and 2, two battery groups 100 are illustrated as being arranged side by side in the direction in which the battery cells 110 are stacked (the y-axis direction), but the number and arrangement of the battery groups 100 are not limited thereto, and the number and arrangement of the battery groups 100 may be variously selected as desired.

The spacer S may be between adjacent battery cells 110. The connecting surface 311b may has a length corresponding to a thickness of the spacer. The spacer S has an interval thickness G and may form a gap at which the battery cells 110 are placed apart from each other. The spacer S may prevent (or at least mitigate) heat exchange between adjacent battery cells 110.

Referring to FIGS. 1 and 2, each of the end plates 200 may be placed on one side of the battery group 100. For example, in one or more embodiments, the end plates 200 may be placed on the sides of the battery cells 110 in the direction (the y-axis direction) in which the battery cells 110 are arranged.

In some embodiments, the end plates 200 may be placed adjacent to the outermost battery cells 110 among the battery cells 110 included in the battery group 100. Thus, the end plates 200 may support the battery group 100 in the direction (the y-axis direction) in which the battery cells 110 are arranged.

The end plates 200 may be in contact with the battery group 100. For example, the end plates 200 may be in contact with the battery cells 110 placed at the outermost ends of the battery group 100 to support the battery group 100. The end plates 200 may apply bearing power to the battery group 100 and absorb swelling force, etc. transmitted from the battery group 100. Thus, structural stability of the battery pack 10 may be improved by the inclusion of the end plates 200.

The end plate 200 may be in contact with at least one battery group 100. The end plate 200 may be in contact with the battery cell 110 arranged at the outermost end of each battery group 100 when the battery groups 100 are arranged in a direction (the x-axis direction) facing each side. The end plate 200 may simultaneously contact the battery groups 100 to align the positions of the battery groups 100 included in the battery pack 10.

In FIGS. 1 and 2, although the end plate 200 is illustrated as being in contact with two battery groups 100, the shape and arrangement of the end plate 200 are not limited thereto and various modifications may be implemented as needed.

The end plate 200 may be provided in a pair. The pair of end plates may be arranged to contact opposite sides of the battery group 100 facing each other. In some embodiments, the pair of end plates 200 may support the battery groups 100 in opposite directions. The battery group 100 may be pressed by the pair of end plates 200 and stably placed inside the battery pack 10.

The pair of end plates 200 may be connected to each other by the middle plate 300. For example, the pair of end plates 200 may be connected to respective end portions of the middle plate 300.

The pair of end plates 200 may be fixed in relative position by the middle plate 300. Thus, the pair of end plates 200 may stably support the battery group 100.

Referring to FIGS. 1, 2, and 5 to 7, each of the end plates 200 may include a main body 210 and a support portion 220.

The main body 210 may have a shape that extends in one direction. For example, the main body 210 may have a shape extending in a direction parallel (or substantially parallel) to the length direction (the y-axis direction) of the battery cell 110.

In some embodiments, the main body 210 may be in contact with the battery cell 110 over a large area. Thus, the main body 210 may stably support the battery group 100.

An insertion groove 211 may be in the main body 210. In some embodiments, the insertion groove 211 in the main body 210 may be configured to receive (accommodate) an insertion portion 320 of the middle plate 300. The insertion groove 211 may be formed on one surface of the end plate 200 facing the middle plate 300, thereby providing a space through which the end plate 200 is coupled to the middle plate 300.

The insertion groove 211 may be formed at a preset position on the end plate 200. In some embodiments, the configuration and location of the insertion groove 211 may determine the position at which the end plate 200 is coupled to the middle plate 300. The insertion groove 211 may has a preset depth in an end plate 200 of the pair of end plates 200.

When a pair of insertion portions 320 arranged at both ends of the middle plate 300 are inserted into a pair of insertion grooves 211 in the end plates 200, respectively, the position and orientation of the end plates 200 may be determined. Thus, the insertion groove 211 may determine the position and orientation in which the insertion portion 320 of the middle plate 300 is inserted and the middle plate 300 is placed. Thus, the insertion portion 320 of the middle plate 300 may be configured to be inserted into the insertion groove 211. In an embodiment, each of the pair of end plates 200 may include a support portion 220 connected to one surface of the insertion groove 211 and may have an elastic restoring force in a direction away from the one surface.

Referring to FIGS. 5 to 7, the insertion groove 211 may include a main groove 211a and an open groove 211b (e.g., a bevel or chamfer).

The main groove 211a may provide a space in which the insertion portion 320 of the middle plate 300 may be placed (e.g., inserted). The main groove 211a may provide a space where the middle plate 300 and the end plate 200 may be connected to each other.

The main groove 211a may contact and support the insertion portion 320. In other words, the main groove 211a may apply bearing power to the insertion portion 320 that comes into contact in a direction away from an inner surface of the main groove 211a. The insertion portion 320 may be supported by the main groove 211a and may be stably placed inside the battery pack 10.

The open groove 211b may be formed on one side of the main groove 211a. The open groove 211b may be connected to the main groove 211a such that an open portion OS into which the insertion portion 320 is inserted may communicate with the main groove 211a. Thus, the middle plate 300 may be inserted into the main groove 211a through the open groove 211b.

The open groove 211b may have a shape that widens toward the open portion into which the middle plate 300 is inserted. In some embodiments, the open groove 211b may have a shape that narrows (tapers) toward the main groove 211a such that the open groove 211b may contact and support the insertion portion 320 inserted into the main groove 211a through the open groove 211b. Thus, the open groove 211b may guide a direction of movement of the insertion portion 320 such that the insertion portion 320 may be easily inserted into the main groove 211a.

Although the open groove 211b and the main groove 211a are described above as separate components, the open groove 211b and the main groove 211a may be integral in one or more embodiments. For example, the insertion groove 211 may be formed as a single groove and may have a shape in which one side of the insertion groove 211 is wider toward the open portion facing the middle plate 300.

Referring to FIGS. 5 to 7, the support portion 220 may be connected to one surface (e.g., an inner surface) of the insertion groove 211. For example, the support portion 220 may be connected to one surface of the insertion groove 211. The support portion 220 may be connected to an inner surface of the main groove 211a and may have a shape that protrudes in a direction (e.g., inward) away from the inner surface of the insertion groove 211. In an embodiment, the support portion 220 may be connected to one surface of the main groove 211a.

One side of one surface of the support portion 220 facing the main groove 211a may be connected to the main groove 211a. For example, in one surface of the support portion 220 facing the main groove 211a, one side of the support portion 220 closest (e.g., adjacent or proximate) to the open groove 211b may be connected to the main groove 211a. In some embodiments, when external force is applied to the support portion 220, the support portion 220 may rotate (e.g., deflect or deform) around one side connected to the main groove 211a. The support portion 220 may be elastically deformed when rotated and have an elastic restoring force in a direction opposite to the rotational direction (e.g., the support portion 220 may be configured to return to its original undeflected or undeformed position).

A portion of the support portion 220 may be spaced apart from the main groove 211a by an elastic gap M. In some embodiments, when external force is applied to the support portion 220, the support portion 220 may be elastically deformed by rotating (e.g., deflecting) toward the main groove 211a due to the presence of the elastic gap M. The support portion 220 may have elastic restoring force in a direction away from one surface of the main groove 211a connected to the support portion 220.

Referring to FIGS. 5 to 7, the support portion 220 may have an entry surface 220a (e.g., an angled or sloped surface) and an engagement surface 220b.

The support portion 220 may have a shape that widens in a direction extending away from the open portion OS and the entry surface 220a may be positioned toward the open portion OS. The entry surface 220a may be positioned away from (e.g., spaced apart from) one surface of the insertion groove 211 to which the support portion 220 is connected.

The support portion 220 may contact the insertion portion 320 that enters the interior of the insertion groove 211 through the entry surface 220a. The support portion 220 may receive force from the insertion portion 320 entering the interior of the insertion groove 211 through the entry surface 220a.

When the support portion 220 contacts the insertion portion 320, the support portion 220 may receive force in a direction (the x-axis direction) perpendicular (or substantially perpendicular) to the entry surface 220a. Thus, the support portion 220 may rotate (e.g., deflect) toward the main groove 211a connected to the support portion 220.

The support portion 220 may be rotated (e.g., deflected) by the insertion portion 320 to form a space through which the insertion portion 320 may enter the interior of the main groove 211a. The support portion 220 may rotate (e.g., deflect) to provide an entry path for the insertion portion 320. Thus, the support portion 220 may guide the movement of the insertion portion 320 within the insertion groove 211.

The engagement surface 220b of the support portion 220 may be arranged in the opposite direction of (e.g., face away from) the open portion OS. The support portion 220 may contact one side of the insertion portion 320 positioned inside the insertion groove 211 by the engagement surface 220b.

The engagement surface 220b may be arranged substantially perpendicular to one surface of the insertion groove 211 to which the support portion 220 is connected. In some embodiments, the engagement surface 220b may support one side of the insertion portion 320 that enters the insertion groove 211 and passes the support portion 220 in the opposite direction (a -y-axis direction) of the open portion OS. Thus, the support portion 220 may maintain engagement with the insertion portion 320 that has entered the interior of the insertion groove 211 through the engagement surface 220b.

In an embodiment, the support portion 220 may be provided in a pair. The pair of support portions 220 may apply bearing power to each insertion portion 320. For example, because a pair of support portions 220 share and receive swelling force transmitted from the battery group 100, the structural stability of the battery pack 10 may be improved compared to a single support portion 220.

A pair of support portions 220 may face each other. For example, a pair of support portions 220 may be symmetrically (or substantially symmetrically) arranged inside the insertion groove 211. The pair of support portions 220 are arranged symmetrically (or substantially symmetrically) to apply the same amount (or substantially the same amount) of bearing power to the insertion portion 320 in a direction symmetrical (or substantially symmetrical) to each other.

For example, the pair of support portions 220 may support the insertion portion 320 such that the insertion portion 320 is positioned on a center line CL of the insertion groove 211. Thus, the support portion 220 may apply bearing power to the middle plate 300 so that the middle plate 300 is positioned in a correct position inside the battery pack 10 (e.g., the support portions 220 may center the middle plate 300).

The pair of support portions 220 may be spaced apart from each other by a first width W1. In some embodiments, a space having the first width W1 may be formed between the pair of support portions 220. Thus, one side of the insertion portion 320 may be inserted into the space between the pair of support portions 220.

Referring to FIGS. 1 to 7, the middle plate 300 is placed between the battery groups 100 to guide the arrangement and position of battery cells 110 and may include a base body 310 and an insertion portion 320.

The middle plate 300 may be placed between the battery groups 100. For example, the middle plate 300 may be placed between two different battery groups 100 and may extend along the side (the x-axis direction) of each battery group 100. Thus, the middle plate 300 may support the battery groups 100 in the width direction (the x-axis direction) of the battery pack 10.

The middle plate 300 may be in contact with the battery groups 100 that are arranged to face opposite surfaces of the middle plate 300. Because the middle plate 300 is placed in contact with the battery groups 100, a space occupied by the battery groups 100 and the middle plate 300 inside the battery pack 10 may be reduced compared to an embodiment in which they are spaced apart from each other. Thus, the energy density of the battery pack 10 may be improved.

In some embodiments, the middle plate 300 may be in contact with the side surface of each battery cell 110. The middle plate 300 may be in contact with the side surface of each battery cell 110, and both ends of the middle plate 300 may be coupled to the end plates 200 and fixed in position such that the position of the battery cell 110 inside the battery pack 10 may be fixed.

The middle plate 300 may be placed so that the opposite surfaces of the middle plate 300 face different (e.g., adjacent) battery groups 100. In some embodiments, the middle plate 300 may spatially separate the battery groups 100 arranged on opposite sides of the middle plate 300 from each other.

The base body 310 may have a shape extending in the direction in which the battery cells 110 are arranged (e.g., the y-axis direction). The base body 310 may be formed on the side surface of the battery group 100 and may extend parallel (or substantially parallel) to the direction in which the battery cells 110 are arranged to cover the side surface of the battery groups 100.

Referring to FIGS. 2 to 5, the middle plate 300 includes a plurality of guide protrusions 311 protruding from the base body 310 and each guide protrusion 311 may be positioned between a pair of adjacent battery cells 110. The guide protrusions 311 may contact and support the battery cells 110 and guide the arrangement position and orientation of the battery cells 110.

The guide protrusions 311 may be formed to protrude from one surface of the base body 310 facing the battery cells 110. The guide protrusions 311 may contact with the battery cells 110 when the middle plate 300 contacts and supports the battery group 100.

The guide protrusion 311 may extend in a preset direction on the base body 310. For example, the guide protrusion 311 may extend in the height direction (z-axis direction) of the battery cells 110.

The guide protrusions 311 may be arranged in a direction parallel (or substantially parallel) to the height direction of the battery cells 110. When the middle plate 300 is in contact with the battery group 100, the area in which the middle plate 300 is in contact with the battery cell 110 may increase due to the presence of the guide protrusions 311. Thus, the battery cells 110 may be stably supported by the middle plate 300.

The guide protrusions 311 may be provided in plurality. The number of guide protrusions 311 formed to protrude from the base body 310 may correspond to the number of battery cells 110 in contact with the base body 310.

In an embodiment, each guide protrusion 311 may be positioned between the battery cells 110. For example, each guide protrusion 311 may be placed between adjacent battery cells 110. Thus, each battery cell 110 may be supported by at least one guide protrusion 311 and stably aligned inside the battery pack 10.

Hereinafter, a 'guide interval' is an interval between adjacent guide protrusions 311 and is defined as a distance between points of each guide protrusion 311 farthest from the base body 310.

Referring to FIGS. 2 to 4, adjacent guide protrusions 311 may be apart from each other with the guide interval I. The guide protrusions 311 are apart from each other at the guide interval I such that the battery cells 110 may be placed between adjacent guide protrusions 311. In an embodiment, the plurality of guide protrusions 311 may be apart from each other at a plurality of guide intervals I.

In some embodiments, each battery cell 110 may be placed between adjacent guide protrusions 311 and may contact the base body 310. Thus, the guide protrusions 311 may determine the position at which each battery cell 110 is placed inside the battery pack 10.

Hereinafter, the 'corner of the battery cell' is defined as a portion of an outer surface of the battery cell 110 having a curvature and in which each surface of the battery cell 110 is connected.

In an embodiment, the guide interval I may correspond (e.g., be equal or substantially equal) to a thickness T of the battery cell 110. The guide protrusions 311 may be apart at the interval corresponding to the thickness T of the battery cell 110. In some embodiments, the battery cells 110 in contact with the middle plate 300 may be supported in contact by the guide protrusions 311.

For example, the battery cells 110 in contact with the middle plate 300 may be supported in contact by adjacent guide protrusions 311. The battery cells 110 may be placed between adjacent guide protrusions 311 and supported by the adjacent guide protrusions 311. Thus, the battery cell 110 may be fixed in position between adjacent guide protrusions 311.

Hereinafter, a 'protrusion width' is defined as a width of the guide protrusion 311 in a direction parallel (or substantially parallel) to the direction in which the battery cells 110 are arranged (the y-axis direction).

Referring to FIG. 4, the guide protrusion 311 may have a shape in which the protrusion width D decreases (e.g., tapers) in a direction away from the base body 310 (the x-axis direction). The protrusion width D of the guide protrusion 311 decreases away from the base body 310 such that the guide protrusion 311 may be placed between battery cells 110 arranged in one direction (the y-axis direction). In some embodiments, the guide protrusion 311 may be inserted between two battery cells 110 that are arranged adjacent to each other, thereby supporting the battery cells 110 more firmly than if the guide protrusion were not provided.

In an embodiment, the rate of decrease in the protrusion width D with respect to the distance from the base body 310 may decrease according to the distance from the base body 310. The protrusion width D may decrease rapidly in a region adjacent to the base body 310 and decrease gradually away from the base body 310.

In some embodiments, the guide protrusion 311 is connected to the base body 310 over a large area, and one side of the guide protrusion 311 placed between the battery cells 110 may be provided with a shape having a constant width (or substantially constant width). Thus, the guide protrusions 311 may stably fix the positions of the battery cells 110 with respect to the base body 310.

The guide protrusions 311 may be formed on each surface of the middle plate 300 facing different battery groups 100. In other words, the guide protrusions 311 may extend from opposite surfaces of the base body 310 (e.g., the guide protrusions 311 may extend outward along the x-axis direction from both surfaces of the middle plate 300).

The middle plate 300 may support the battery cells 110 of the battery group 100 that are in contact with opposite surfaces of the middle plate 300 and align their positions. Thus, the energy density of the battery pack 10 may be improved.

Referring to FIG. 4, in one or more embodiments, the guide protrusion 311 may have a contact surface 311a and a connecting surface 311b.

Referring to FIG. 4, the contact surface 311a may be in contact with a corner 110a of the battery cell 110. Each corner of the battery cell 110 is supported by the contact surface 311a of a different guide protrusion 311 such that the position inside the battery pack 10 may be stably fixed. In an embodiment, the at least one guide protrusion may include a pair of contact surfaces 311a that contacts a corner 110a of each of the adjacent battery cells 110 and a connecting surface 311b that may connect the pair of the contact surfaces 311a to each other.

The contact surface 311a may be provided as a pair of contact surfaces 311a. The guide protrusion 311 may have a pair of contact surfaces 311a and may support different battery cells 110. In this manner, in some embodiments, the number of guide protrusions 311 required to support the battery cells 110 may be reduced. Thus, the volume of the battery pack 10 may be reduced, and the energy density may be improved (increased).

The contact surface 311a may have a shape corresponding (or substantially corresponding) to the shape of the corner 110a of the battery cell 110. The contact surface 311a may cover at least a portion of the corner 110a of the battery cell 110.

Because the contact surface 311a has a shape covering the corner 110a of the battery cell 110, the area that contacts and supports the battery cell 110 may be increased. In some embodiments, the area in which the battery cell 110 is in contact with and supported by the guide protrusion 311 may increase such that the battery cell 110 may be stably supported by the guide protrusion 311.

Referring to FIG. 4, the connecting surface 311b may connect a pair of contact surfaces 311a. The connecting surface 311b may connect the pair of contact surfaces 311a facing each other. For example, the connecting surface 311b may be placed in a direction parallel (or substantially parallel) to the direction in which the battery cells 110 are arranged.

The connecting surface 311b may separate the battery cells 110 that contact the pair of contact surfaces 311a from each other. For example, the connecting surface 311b may have a preset connection length D1 such that the battery cells 110 that contact the pair of contact surfaces 311a may be spaced apart from each other at an interval corresponding to the connection length D1. In some embodiments, the length of the connecting surface 311b may determine an interval at which the battery cells 110 are spaced apart from each other.

The connecting surface 311b may have a length corresponding to a thickness of the spacer S. The connection length D1 of the connecting surface 311b may have a value corresponding to (e.g., equal or substantially equal to) a separation thickness G of the spacer S.

The connecting surface 311b has a value corresponding to (e.g., equal or substantially equal to) the separation thickness G to form a space in which the spacer S may be placed between battery cells 110. Thus, the spacer S is placed between the battery cells 110 so that the stability of the battery pack 10 may be improved.

Referring to FIGS. 1 to 3 and 5 to 7, the insertion portion 320 may be capable of being inserted into the insertion groove 211 and may include an insertion body 321 and an insertion block 322. The insertion block 322 may engage the support portion 220.

The insertion portion 320 may be at an end portion of the base body 310. The insertion portion 320 may be at an end portion of the base body 310 so that at least a portion of the insertion portion 320 may be placed inside the insertion groove 211.

In some embodiments, the insertion portion 320 may form an end portion of the middle plate 300. Thus, the insertion portion 320 may form a portion of the middle plate 300 that may be coupled to the end plate 200.

The insertion portion may be provided in a pair of insertion portions and may be at opposite ends of the base body 310. The pair of insertion portions 320 may be inserted into the insertion grooves 211 of the pair of end plates 200. In some embodiments, the pair of insertion portions 320 may be respectively connected to the pair of end plates 200 arranged on opposite sides of the battery group 100.

The insertion portions 320 may connect the base body 310 to the pair of end plates 200. Thus, the middle plate 300 may connect the pair of end plates 200 to each other.

Referring to FIGS. 3 and 5 to 7, the insertion body 321 may be at an end of the base body 310. The insertion body 321 may be connected to an end portion of the base body 310 and may have a shape that extends in a direction (the y-axis direction) in which the base body 310 extends.

The insertion body 321 may be between the base body 310 and the insertion block 322. One end of the insertion body 321 may be connected to the base body 310, and the other end of the insertion body 321 may be connected to the insertion block 322. Thus, the insertion body 321 may transmit bearing power to the base body 310 when the insertion block 322 is supported by the end plate 200.

The insertion body 321 may have a preset second width W2. For example, the insertion body 321 may have the second width W2 that is greater than the first width W1, which is a distance between the pair of support portions 220 (as shown in FIG. 5).

Because the second width W2 has a greater value than the first width W1, the insertion body 321 may enter the interior of the insertion groove 211 and receive elastic force from the pair of support portions 220. Thus, the insertion body 321 may be supported by the support portion 220 while being placed inside the insertion groove 211.

Referring to FIGS. 3 and 5 to 7, the insertion block 322 may be at one end of the insertion body 321. The insertion block 322 is at one end of the insertion body 321 and may be inserted into the interior of the insertion groove 211. The insertion block 322 may be inserted into the interior of the insertion groove 211 and coupled to the end plate 200.

The insertion block 322 may have a shape having a width narrowing (tapering) away from the insertion body 321. In an embodiment, one side of the insertion block 322 adjacent to the insertion body 321 may have a width greater than the insertion body 321.

As an optional embodiment, the other side of the insertion block 322 apart from the insertion body 321 may have a smaller width than the insertion body 321.

In some embodiments, when the insertion block 322 is inserted into the insertion groove 211, the insertion block 322 may push the support portion 220 to increase (widen) the first width W1. Thus, the insertion block 322 may pass between the pair of support portions 220 and thereby coupled the middle plate 300 to the end plate 200.

In an embodiment, the insertion block 322 may have an insertion surface 322a and a joining surface 322b.

The insertion block 322 may have the insertion surface 322a facing away from the base body 310 in the y-axis direction. The insertion surface 322a may contact the support portion 220 when the insertion portion 320 enters the interior of the insertion groove 211.

The insertion surface 322a may contact the entry surface 220a of the support portion 220. In some embodiments, the insertion surface 322a may contact the entry surface 220a of the support portion 220 and push the support portion 220 toward the inner surface of the insertion groove 211. Thus, the support portion 220 may rotate (e.g., deflect) in a direction in which the first width W1 increases (widens), and a space into which the insertion block 322 may enter may be achieved.

The joining surface 322b may contact the engagement surface 220b of the support portion 220 when the insertion block 322 passes between the pair of support portions 220. The joining surface 322b may be supported in contact by the engagement surface 220b that is placed substantially perpendicular to the open portion OS of the insertion groove 211 (e.g., the joining surface 322b of the middle plate 300 may engage the engagement surface 220b of the end plate 200 to secure the middle plate 300 to the end plate 200).

In some embodiments, the insertion block 322 may be caught and supported by the support portion 220. Because the engagement surface 220b supports the joining surface 322b in a direction (the y-axis direction) opposite to the direction in which the base body 310 is placed, the middle plate 300 including the insertion block 322 may be fixed in a relative position with respect to the end plate 200. In this manner, the end plate 200 may be coupled to the middle plate 300.

Below, the configuration, operating principle, and effect of the battery pack 10 according to an embodiment of the present disclosure are described in detail.

Referring to FIGS. 1 and 2, the battery pack 10 according to an embodiment of the present disclosure may include the battery groups 100, the end plates 200, and the middle plate 300.

In order for the battery groups 100, the end plates 200, and the middle plate 300 to be combined with each other to form the battery pack 10, the battery groups 100 may be aligned along a direction (e.g., the y-axis direction).

Referring to FIGS. 3 and 4, the battery group 100 may be aligned by the middle plate 300. Each battery cell 110 of the battery group 100 may be supported in contact by the guide protrusions 311 protruding from the middle plate 300 and aligned to a position within the battery pack 10.

In an embodiment, each battery cell 110 may be supported in contact by the guide protrusions 311 arranged adjacent to each other. For example, the corner 110a of each battery cell 110 is supported by the contact surface 311a of the guide protrusion 311 such that the orientations and positions of the battery cells 110 with respect to the middle plate 300 may be stably aligned.

Referring to FIGS. 1, 2, and 5 to 7, the middle plate 300 may be capable of being inserted into the insertion groove 211 of the end plate 200 and coupled to the end plate 200.

A relative position of the middle plate 300 with respect to the end plate 200 may be determined by the insertion groove 211. For example, the insertion groove 211 formed in the end plate 200 may determine the position at which the middle plate 300 is combined with the end plates 200, thereby determining the position of the middle plate 300 within the battery pack 10. Thus, the positions of the middle plate 300 and the battery group 100 inside the battery pack 10 may be determined.

Referring to FIGS. 5 to 7, the middle plate 300 and the end plates 200 may be coupled together by inserting the insertion portion 320 into the insertion groove 211.

For example, the insertion block 322 of the insertion portion 320 may be inserted into the interior of the insertion groove 211 and contact the support portion 220. The insertion block 322 may contact the entry surface 220a of the support portion 220 through the insertion surface 322a.

When the insertion portion 320 enters the interior of the insertion groove 211, the insertion surface 322a may press the entry surface 220a such that the support portion 220 may rotate (e.g., deflect) toward the inner surface of the main groove 211a. Thus, the first width W1 may increase (widen) so that the insertion block 322 may pass between the pair of support portions 220.

When the insertion block 322 passes between the pair of support portions 220, the support portions 220 may return to their original position due to an elastic restoration force, and the engagement surface 322b of the insertion block 322 may contact with the engagement surface 220b.

The support portion 220 may support the insertion block 322 in the direction (the y-axis direction) opposite to the open portion OS of the insertion groove 211 through the engagement surface 220b, thereby preventing the middle plate 300 from inadvertently sliding out of the open portion OS of the insertion groove 211 in the y-axis direction. Thus, the middle plate 300 including the insertion block 322 may be connected to the end plate 200.

The battery pack and the electronic apparatus including the same according to an embodiment of the present disclosure provide a battery pack structure that supports battery cells so that the battery cells may be easily aligned. For example, the battery cells may be supported using the guide protrusions protruding from the middle plate to align the position and orientation of the battery cells within the battery pack.

In some embodiments, the middle plate may be inserted into the insertion grooves formed in the end plates to couple the middle plate to the end plates and to fix the positions and orientations of the battery cells in the battery pack.

The battery pack and the electronic apparatus including the same according to an embodiment of the present disclosure have the effect in which the guide protrusions protruding from the middle plate support the battery cells, thereby facilitating alignment of the battery groups within the battery pack.

In some embodiments, by forming the insertion groove in the end plate to fix the position at which the middle plate is coupled to the end plate and by forming the engagement coupling structure between the end plate and the middle plate, the battery cells may be aligned in the correct positions inside the battery pack.

However, the effects obtainable through the present disclosure are not limited to the effects described above, and other technical effects not mentioned will be clearly understood by those skilled in the art from the description of the invention described below.

## Claims

1. A battery pack (10) comprising:
a plurality of battery groups (100) each comprising a plurality of battery cells (110);
a pair of end plates (200) on opposite sides of the plurality of battery groups (100); and
a middle plate (300) between adjacent battery groups (100) of the plurality of the battery groups (100), the middle plate (300) connecting the pair of the end plates (200) to each other,
wherein the middle plate (300) comprising at least one guide protrusion (311) extending in a preset direction, the at least one guide protrusion (311) being between adjacent battery cells (110) of the plurality of battery cells (110).

2. The battery pack (10) of claim 1, wherein:
the at least one guide protrusion (311) comprises a plurality of guide protrusions (311), and
the plurality of guide protrusions (311) is apart from each other at a plurality of guide intervals (I).

3. The battery pack (10) of claim 2, wherein each of the plurality of guide intervals (I) corresponds to a thickness (T) of a respective battery cell (110) of the plurality of battery cells (110).

4. The battery pack (10) of any of claims 1 to 3, wherein the plurality of guide protrusions (311) is on both surfaces of the middle plate (300) facing the adjacent battery groups (100).

5. The battery pack (10) of any of claims 1 to 4, wherein the at least one guide protrusion (311) includes a pair of contact surfaces (311a) that contacts a corner (110a) of each of the adjacent battery cells (110) and a connecting surface (311b) that connects the pair of the contact surfaces (311a) to each other.

6. The battery pack (10) of claim 5, wherein the contact surfaces (311a) facing the corner (110a) of each of the adjacent battery cells (110) each have a shape corresponding to a shape of the corner (110a) of each of the adjacent battery cells (110).

7. The battery pack (10) of claim 5, further comprising:
a spacer (S) between the plurality of battery cells (110) adjacent to each other,
wherein the connecting surface (311b) has a length corresponding to a thickness of the spacer (S).

8. The battery pack (10) of any of claims 1 to 7, further comprising:
an insertion groove (211) having a preset depth in an end plate (200) of the pair of end plates (200), and
an insertion portion (320) of the middle plate (300) configured to be inserted into the insertion groove (211).

9. The battery pack (10) of claim 8, wherein each of the pair of end plates (200) includes a support portion (220) connected to one surface of the insertion groove (211) and having an elastic restoring force in a direction away from the one surface.

10. The battery pack (10) of claim 9, wherein the insertion portion (320) includes an insertion block (322) configured to engage the support portion (220).

11. An electronic apparatus comprising:
a battery pack (10) configured to supply power, wherein the battery pack (10) comprises:
a plurality of battery groups (100) each comprising a plurality of battery cells (110),
a pair of end plates (200) on opposite sides of the plurality of battery groups (100), and
a middle plate (300) between adjacent battery groups (100) of the plurality of battery groups (100), the middle plate (300) connecting the pair of the end plates (200) to each other, and
wherein the middle plate (300) comprising at least one guide protrusion (311) extending in a preset direction, the at least one guide protrusion (311) being between adjacent battery cells (110) of the plurality of battery cells (110).

12. The electronic apparatus of claim 11, wherein:
the at least one guide protrusion (311) comprises a plurality of guide protrusions (311), and
the plurality of guide protrusions (311) is apart from each other at a plurality of guide intervals (I).

13. The electronic apparatus of claim 12, wherein each of the plurality of guide intervals (I) corresponds to a thickness of a respective battery cell (110) of the plurality of battery cells (110).

14. The electronic apparatus of any of claims 11 to 13, wherein the plurality of guide protrusions (311) is on both surfaces of the middle plate (300) facing the adjacent battery groups (100).

15. The electronic apparatus of any of claims 11 to 14, wherein the at least one guide protrusion (311) includes a pair of contact surfaces (311a) that contact a corner (110a) of each of the adjacent battery cells (110) and a connecting surface (311b) that connects the pair of the contact surfaces (311a) to each other.
